# EUROPÄISCHE PATENTSCHRIFT

(11) **EP 2 030 847 B1**
(45) Veröffentlichungstag und Bekanntmachung des Hinweises auf die Patenterteilung: **11.04.2012**
(21) Anmeldenummer: 08013981.9
(22) Anmeldetag: 05.08.2008
(51) Int. Cl.: B60R 19/18

(54) **Aufprallbegrenzungssystem eines Fahrzeugs**
Impact limiting system of a vehicle
Système de limitation de collision d'un véhicule

(30) Priorität: 30.08.2007 DE 102007040942
(43) Veröffentlichungstag der Anmeldung: 04.03.2009
(73) Patentinhaber: GM Global Technology Operations LLC, Detroit, MI 48265-3000 (US)
(72) Erfinder: Schwarz, Martin, 55271 Stadecken-Elsheim (DE); Kohlrieser, Ute, 64319 Pfungstadt (DE)
(74) Vertreter: Spitzfaden, Ralf

(56) Entgegenhaltungen:
- EP-A- 1 775 172
- WO-A-2004/106117
- DE-A1- 3 020 997
- FR-A- 2 736 315

## Beschreibung

Aufprallbegrenzungssystem eines Fahrzeugs mit einem Verblendelement und einer Unterstruktur des Stoßfängers bzw. Bumpers. Dabei ist das Verblendelement an das Styling des Fahrzeugs angepasst, während die Bumperunterstruktur den eigentlichen Aufprallbegrenzer bildet.

Aus den Druckschriften EP 1 628 857 B1, DE 30 20 997 C2 und FR 2 736 315 sind Stoßdämpfersysteme bekannt, die hinter einem Verblendelement eine Energieabsorptionsstruktur aufweisen mit Materialien, die sich zur Energieabsorption verformen. Für unterschiedliche Fahrzeuge einer Plattform sind somit unterschiedlich tiefe bzw. lange Energieabsorptionselemente für jeden Fahrzeugtyp einer Plattform vorzusehen.

Häufig ist die Bumperunterstruktur vom Verblendelement beabstandet, so dass zwischen Bumperunterstruktur und Verblendelement ein Hohlraum entsteht, der je nach Fahrzeugtyp eine unterschiedliche Tiefe aufweisen kann. Dieser Hohlraum verringert nachteilig einen Barriereeindringweg, der vorzusehen ist, um eine Schädigungsfreiheit für die Außenhaut des Fahrzeugs, insbesondere auch bei einem längeren Überhang eines Fahrzeugstylings oder -designs, zu gewährleisten.

Diese Schädigungsfreiheit soll insbesondere bei niedrigen Kollisionsgeschwindigkeiten gewährleistet werden, ohne dass Karosserieteile oder auch die Außenhaut des Fahrzeugs selber berührt oder beschädigt werden. Da jedoch die Bumperunterstruktur erst dann wirksam wird, wenn das Verblendelement so weit bei einem Zusammenstoß eingedellt ist, dass das nun eingedellte Verblendelement die Stoßkraft auf die Bumperunterstruktur übertragen kann, muss bei hohem Kostenaufwand die Bumperunterstruktur den unterschiedlichen Stylingausführungen der unterschiedlichen Modelle einer Serie von Fahrzeugen angepasst werden, um einen vorgeschriebenen Barriereeindringweg für jedes der Modelle zu gewährleisten und damit eine Beschädigungsfreiheit der Karosserie für jedes einzelne Modell zu sichern.

Aufgabe der Erfindung ist es, ein Aufprallbegrenzungssystem für ein Fahrzeug mit einem Verblendelement und einer Bumperunterstruktur zu schaffen, das für verschiedene Fahrzeuge innerhalb einer Plattform und/oder auch plattformübergreifend mit unterschiedlichen Karosserieüberhängen einsetzbar ist.

Gelöst wird diese Aufgabe mit dem Gegenstand des unabhängigen Anspruchs 1. Vorteilhafte Weiterbildungen der Erfindung ergeben sich aus den abhängigen Ansprüchen.

Erfindungsgemäß wird ein Aufprallbegrenzungssystem eines Fahrzeugs mit einem Verblendelement und einer Bumperunterstruktur geschaffen, wobei die Bumperunterstruktur beabstandet von dem Verblendelement und verdeckt durch das Verblendelement an der Fahrzeugkarosserie angeordnet ist. Die Bumperunterstruktur weist dazu stoßenergieaufnehmende Elemente auf. Darüber hinaus weist das Aufprallbegrenzungssystem ein Stoßkraftübertragungselement auf, das zwischen dem Verblendelement und der Bumperunterstruktur angeordnet ist.

Das Stosskraftübertragungselement ist formstabil und unnachgiebig und überträgt die auf das Verblendelement wirkende Stosskraft auf die Bumperunterstruktur.

Für die Auslegung des Stosskraftübertragungselements ist es demnach wichtig, eine ausreichende Festigkeit für die bei schlagartiger Belastung im niedrigen Geschwindigkeitsbereit auftretenden Kräfte vorzusehen, zumal das Stosskraftübertragungselement bei Belastungen gemäß genormter Versicherungseinstufungstests und entsprechender US- und Kanada-üblicher Typprüfungstests nicht versagen darf. Weiterhin soll die Konstruktion des Stosskraftübertragungselements so geschaffen sein, dass sich beim Anprall bzw. bei einer Stossbelastung eine gleiche oder eine nur geringfügig abweichende Kinematik des sich verformenden gesamten Aufprallbegrenzungssystems einstellt, unabhängig von der Größe und Tiefe des jeweiligen für das Auffüllen des Zwischenraums zwischen Verblendelement und Bumperunterstruktur erforderlichen Stosskraftübertragungselements.

Ein derartiges Aufprallbegrenzungssystem hat den Vorteil, dass unterschiedliche Abstände zwischen Verblendelement und Bumperunterstruktur nun mit einem Stoßkraftübertragungselement aufgefüllt sind. Damit ermöglicht das Stoßkraftübertragungselement die Einhaltung geforderter Eindringtiefen der Barrieren trotz einheitlicher Bumperunterstrukturen bei unterschiedliche Fahrzeugmodellen. Damit wird die Einhaltung der geforderten Beschädigungsfreiheit bei unterschiedlichen Stylings unter Verwendung nur einer für alle Modelle gleichen Bumperunterstruktur gewährleistet.

Das Stoßkraftübertragungselement ermöglicht vor allem, auch den entstandenen Hohlraum der durch die Verwendung nur einer Version der Bumperunterstruktur bei unterschiedlichen Stylingkonturen entsteht, optimal zu nutzen. Dabei kann der Barriereneinwirkungsbereich durch das Stoßkraftübertragungselement gezielt beeinflusst werden.

In einer bevorzugten Ausführungsform der Erfindung bildet das Stoßkraftübertragungselement einen Spacer, der zwischen Verblendelement und Bumperunterstruktur eingepasst ist und die Stylingunterschiede von Fahrzeugmodellen in Bezug auf den Barriereneindringweg ausgleicht.

Vorzugsweise weist das Stoßkraftübertragungselement eine formstabile, strukturierte Kunststoffmasse auf, deren Konturen an das Verblendelement und an die Bumperunterstruktur angepasst ist. Um eine Formstabilität und Unnachgiebigkeit der Kunststoffmasse zu gewährleisten, kann diese Kunststoffmasse vorzugsweise eine partikelgefüllte Kunststoffmasse mit einem Füllgrad von 40 Vol.% bis 80 Vol.% Hartstoffpartikel aufweisen.

Derartige Hartstoffpartikel sind vorzugsweise Keramikpartikel, die gegenüber Metallpartikeln ein geringeres Gewicht aufweisen und durch die Kunststoffmasse in unterschiedlichen Konturen von Verblendelement und Bumperunterstruktur angepasst werden können. Die Hartstoffpartikel können auch aus Kurzfasern oder Whiskern bestehen, wodurch die Formstabilität und Festigkeit der Kunststoffmasse erhöht wird.

Alternativ kann das Stoßkraftübertragungselement eine formstabile, strukturierte Metallkonstruktion aufweisen, deren Konturen ebenfalls an das Verblendelement und die Bumperunterstruktur angepasst ist. Dabei kann zur Gewichtsersparnis das Stoßkraftübertragungselement eine Wabenstruktur aufweisen, wobei die Wabenstrukturelemente karoförmige, viereckige, sechseckige oder polygonale Formen besitzen können. In jedem Fall sind jedoch die Stege der Wabenstruktur in Stoßkraftrichtung ausgerichtet, um die Funktion eines Stoßkraftübertragungselements zu gewährleisten.

Während das Verblendelement eine Außenhaut für das Aufprallbegrenzungssystem bildet und dem Styling des jeweiligen Fahrzeugmodells angepasst sein kann, bildet die Bumperunterstruktur den eigentlichen Aufprallbegrenzer. Das Verblendelement wird häufig auch als Bumper-Pelle bezeichnet, da es keine Aufprallbegrenzungsfunktion erfüllt und häufig nur eine formschöne Verkleidung der Bumperunterstruktur darstellt.

In einer weiteren Ausführungsform der Erfindung weist die Bumperunterstruktur Deformationselemente auf, die vorzugsweise in Stoßkraftrichtung ausgerichtet sind und sich bis zu einem gewissen Grade deformieren, ohne dass die Außenhaut des Fahrzeugs außerhalb des Aufprallbegrenzungssystems beschädigt wird. Somit ist es möglich, dass nach einem Aufprall bei niedriger Geschwindigkeit von dem erfindungsgemäßen Aufprallbegrenzungssystem lediglich die Deformationselemente auszutauschen oder zu ersetzen sind.

Vorzugsweise weist dazu die Bumperunterstruktur einen formstabilen elastisch nachgiebigen Querträger auf, der sich auf den Deformationselementen abstützt. Dieser Querträger ist derart formstabil, dass der Querträger und das Stoßkraftübertragungselement bei geringen Aufprallgeschwindigkeiten nur elastisch deformiert werden, während die Deformationselemente plastisch und/oder Gummielastisch verformt werden. Dabei kann das Stoßkraftübertragungselement den Querträger mindestens teilweise umhüllen. Auch ist es möglich, dass der Querträger das Stoßkraftübertragungselement teilweise umhüllt. Schließlich ist bei einer weiteren Ausführungsform der Erfindung das Stoßkraftübertragungselement an dem Querträger formschlüssig fixiert.

Das Stoßkraftübertragungselement kann auch Schnapphaken aufweisen, mit denen es an der Bumperunterstruktur oder an das Verblendelement geklipst ist. Auch können sowohl am Verblendelement und/oder an der Bumperunterstruktur Befestigungselemente vorgesehen werden, an denen das Stoßkraftübertragungselement montiert ist. Sowohl durch derartige Befestigungselemente, wie Schrauben oder Nieten, als auch durch die Schnapphaken kann gewährleistet werden, dass das Stoßkraftübertragungselement nach Beschädigungen auswechselbar ist. Außerdem besteht die Möglichkeit, durch Verkleben oder durch thermisches Fügen eine stoffschlüssige Verbindung zwischen Stoßkraftübertragungselement und Verblendelement oder Bumperunterstruktur herzustellen, was die Fertigungskosten verringern könnte, jedoch die Austauschbarkeit bei Beschädigungen des Stoßkraftübertragungselements gegenüber Schnapphaken oder Befestigungselementen vermindert.

Weiterhin ist es vorgesehen, das Stoßkraftübertragungselement mehrstückig auf der Breite der Bumperunterstruktur anzuordnen. Dieses hat den Vorteil, dass bei Beschädigung des Stoßkraftübertragungselements die Austauschkosten und Reparaturkosten verringert werden können, da nur die beschädigten Abschnitte des Stoßkraftübertragungselements auszuwechseln sind. Unter dem Aspekt der Stoßkraftverteilung kann es von Vorteil sein, ein einstückiges Stoßkraftübertragungselement für die gesamte Breite der Bumperunterstruktur vorzusehen.

Anstelle einer Kunststoffstruktur kann das Stoßkraftübertragungselement eine Metallkonstruktion aufweisen. Die Basis derartiger Konstruktionen kann ein Spritzgussteil, ein Strangpressprofil oder eine Schweißkonstruktion bzw. ein Tiefziehteil bilden, das entweder aus Kunststoff oder Metall vorgefertigt ist. Außerdem besteht die Möglichkeit, dass das Stoßkraftübertragungselement einteilig mit dem Verblendelement hergestellt wird und gemeinsam mit dem Verblendelement auf die Bumperunterstruktur montiert wird.

Je nach verwandter Befestigungsmethode sind entweder an der Bumperunterstruktur oder an dem Verblendelement entsprechende Angüsse, Rund- oder Langlöcher, Schweißmuttern oder Bolzen vorzusehen, um eine sichere Montage des gesamten Aufprallbegrenzungssystems zu gewährleisten. Die Vorteile des erfindungsgemäßen Aufprallbegrenzungssystems liegen;
1. in der kostengünstigen, steifen und leichten Konstruktion;
2. in der hohen Variabilität des Aufprallbegrenzungssystems, wobei das Einlegen oder Anbringen des Stoßkraftübertragungselements in Form eines Spacers die Verwendung einer einzigen Bumperunterstruktur für verschiedene Stylings und Karosserieüberhänge ermöglicht;
3. in einem modellübergreifenden Einsatz des Stoßkraftübertragungselements in Form eines Spacers;
4. in der nicht Beeinträchtigung des "low-speed-Verhalten" und des "high-speed-Verhaltens" bei Aufprallvorgängen.

In einer weiteren Ausführungsform der Erfindung kann die Bumperunterstruktur ein Metallteil aus einem Strangpressprofil oder einer Schweißkonstruktion aufweisen, das zwischen dem Übergang von den Deformationselementen zur Karosserie angeordnet ist. Dieses Metallteil kann ein Stahlblechteil oder auch ein Aluminiumstrangpressteil aufweisen.

Die Erfindung wird nun anhand der beigefügten Figuren näher erläutert.
- Figur 1: zeigt eine schematische Teilansicht eines Aufprallbegrenzungssystems, einer erste Ausführungsform der Erfindung;
- Figur 2: zeigt eine schematische Teilansicht eines Aufprallbegrenzungssystems, einer zweiten Ausführungsform der Erfindung;
- Figur 3: zeigt eine Prinzipskizze mit einem Aufprallbegrenzungssystem, einer dritten Ausführungsform der Erfindung;
- Figur 4: zeigt eine Prinzipskizze mit einem Aufprallbegrenzungssystem, einer vierten Ausführungsform der Erfindung;
- Figur 5: zeigt eine schematische, perspektivische Teilansicht eines Aufprallbegrenzungssystems, einer fünften Ausführungsform der Erfindung;
- Figur 6: zeigt eine schematische, perspektivische Teilansicht des Aufprallbegrenzungssystems gemäß Figur 5 aus einem anderen Blickwinkel;
- Figur 7: zeigt eine schematische, perspektivische Teilansicht des Aufprallbegrenzungssystems gemäß Figur 5 aus einem weiteren geänderten Blickwinkel.

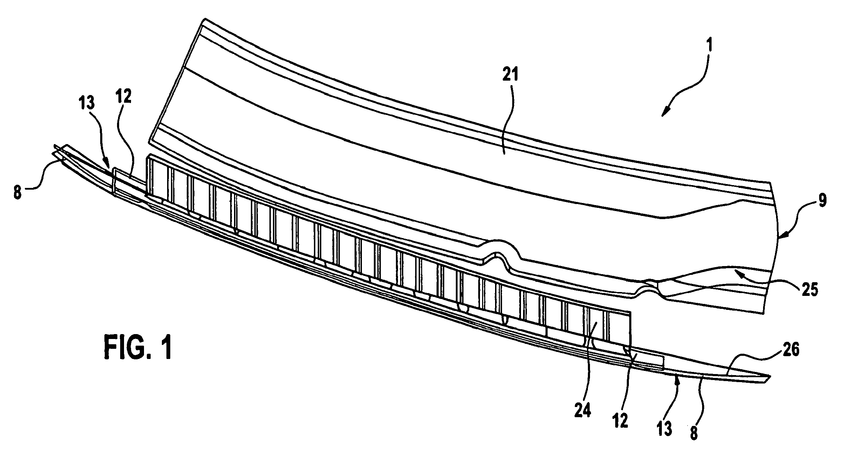

Figur 1 zeigt eine schematische Teilansicht eines Aufprallbegrenzungssystems 1, einer ersten Ausführungsform der Erfindung. In dieser Ausführungsform der Erfindung weist eine Bumperunterstruktur 9 einen Querträger 21 auf, der die Stoßenergie auf hier nicht gezeigte stoßaufnehmende Elemente der Bumperunterstruktur 9 überträgt. Dieser Querträger 21 wird durch ein Verblendelement 8 abgedeckt, das dem Styling eines Fahrzeugs im Bereich der Bumperunterstruktur 9 angepasst ist und auch Bumper-Pelle genannt wird.

In der hier gezeigten Teilansicht der Figur 1 ist das Verblendelement 8 noch nicht an einem Fahrzeug montiert, sondern entfernt von dem Querträger 21 der Bumperunterstruktur 9 angeordnet, um die Sicht auf ein Stoßkraftübertragungselement 12 freizugeben, das in seiner Kontur an eine Innenseite 26 des Verblendelements 8 und an die Heckseite 25-des Querträgers 21 angepasst ist.

Dieses Stoßkraftübertragungselement 12 füllt bei der Montage des Verblendelements 8 an das Fahrzeug einen sich ergebenden Zwischenraum zwischen Verblendelement 8 und Bumperunterstruktur 9 auf, so dass aufgrund der Formstabilität und Unnachgiebigkeit des Stoßkraftübertragungselements 12 die Stoßenergie, insbesondere bei geringen Kollisionsgeschwindigkeiten auf den Querträger 21 übertragen werden kann, der seinerseits unter geringer Deformation und/oder einer elastischen Nachgiebigkeit die Stoßenergie auf die nicht gezeigten, stoßaufnehmenden Elemente der Bumperunterstruktur 9 überträgt.

Darüber hinaus weist das Stoßkraftübertragungselement 12 neben seiner Funktion als Spacer 13, der den Freiraum zwischen montiertem Verblendelement 8 und montierter Bumperunterstruktur 9 auffüllt, einen Überhang 24 auf, der über den Querträger 21 gestülpt werden kann, um das Stoßkraftübertragungselement 12 mit der Bumperunterstruktur 9 formschlüssig und/oder kraftschlüssig zu verbinden. In dieser Ausführungsform der Erfindung ist das Stoßkraftübertragungselement 12 stoffschlüssig mit dem Verblendelement 8 verbunden und erstreckt sich über die volle Breite der Bumperunterstruktur 9.

Dazu wird die stoffschlüssige Verbindung mittels Verkleben des Stoßkraftübertragungselements 12 mit der Innenseite 26 des Verblendelements 8 erreicht. Anstelle einer stoffschlüssigen Verbindung können aber auch Schraubverbindungen, Nietverbindungen oder Schnapphaken zur Fixierung des Stoßkraftübertragungselements 12 entweder an dem Verblendelement 8 oder an der Bumperunterstruktur 9 vorgesehen werden. Anstelle eines einstückigen Stoßkraftübertragungselements 12, das sich über die gesamte Breite der Bumperunterstruktur 9 erstreckt, können auch Teilstücke des Verblendelements 8 auf der Breite der Bumperunterstruktur 9 verteilt angeordnet werden.

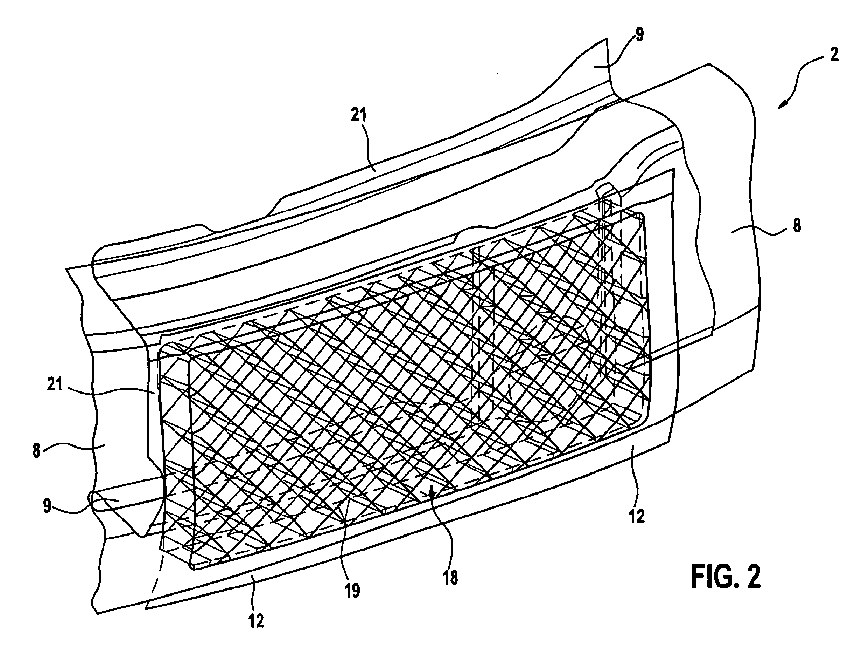

Figur 2 zeigt eine schematische Teilansicht eines Aufprallbegrenzungssystems 2, einer zweiten Ausführungsform der Erfindung. In dieser Teilansicht wölbt sich das Verblendelement 8 sowohl über das Stoßkraftübertragungselement 12, als auch über die Bumperunterstruktur 9. von dem Stoßkraftübertragungselement 12 ist lediglich ein Ausschnitt zu sehen, wobei die Konstruktion des Stoßkraftübertragungselements 12 eine Wabenstruktur 18 aufweist, um in vorteilhafter Weise Gewicht einzusparen. Die Stege 19 der Wabenstruktur 18 können massiv, formstabil und aus einem unnachgiebigen Werkstoff aufgebaut sein, um die Stoßkraft, die auf das Verblendelement 18 einwirkt, direkt auf die Bumperunterstruktur 9 zu übertagen, die auch in dieser Ausführungsform der Erfindung einen Querträger 21 aufweist.

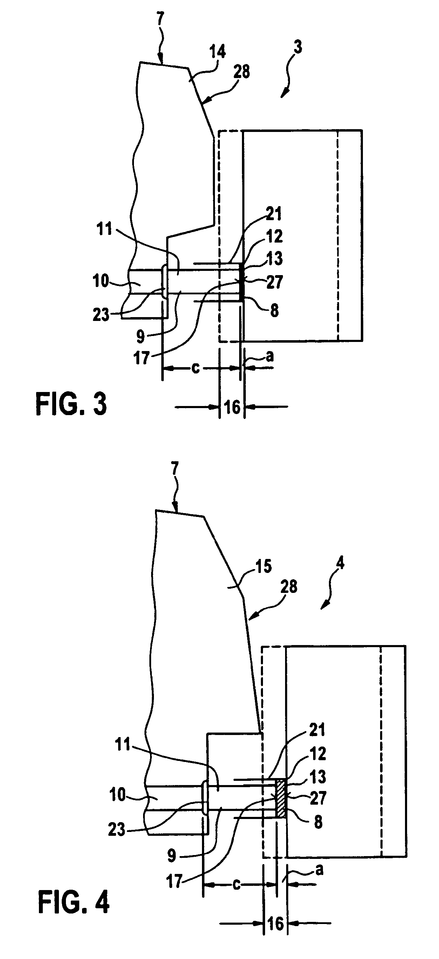

Figur 3 zeigt eine Prinzipskizze mit einem Aufprallbegrenzungssystem 3, einer dritten Ausführungsform der Erfindung. Diese Prinzipskizze zeigt den Heckbereich 28 eines Fahrzeugs 7 das auf einer Fahrzeugkarosserie 10 aufgebaut ist und an der Fahrzeugkarosserie 10 das Aufprallbegrenzungssystem 3 aufweist. Zwischen dem Aufprallbegrenzungssystem 3 und der Fahrzeugkarosserie 10 ist ein Metallteil 23, beispielsweise aus einem Strangpressmaterial angeordnet, auf das stoßaufnehmende Elemente 11 der Bumperunterstruktur 9 einwirken. Aufgrund des Stylings bzw. Designs dieses Fahrzeugmodells 14 ergibt sich nur ein äußerst geringer Abstand a zwischen der Bumperunterstruktur 9 und einem Verblendelement 8, der durch einen formstabilen Spacer 13, welcher mit seiner bumperseitigen Kontur 17 und seiner blendelementseitigen Kontur 27 an die Bumperunterstruktur 9 bzw. das Verblendelement 8 angepasst ist, überbrückt wird, um bei einer konstanten Tiefe c der Bumperunterstruktur 9 einen Barriereeindringweg 16 bei einer genormten Stoßbelastung des Aufprallbegrenzungssystems 3 zu gewährleisten, ohne dass der Heckbereich 28 dieses Fahrzeugmodells 14 beschädigt wird.

Figur 4 zeigt eine Prinzipskizze mit einem Aufprallbegrenzungssystem 4, einer vierten Ausführungsform der Erfindung. Obgleich nun der Heckbereich 28 eines weiteren Fahrzeugmodells 15 deutlich über den in Figur 3 gezeigten Heckbereich 28 hinaus ragt, kann dennoch eine Bumperunterstruktur 9 mit gleicher konstanter Tiefe c modellübergreifend eingesetzt werden. Lediglich der nun größere Abstand a zwischen Verblendelement 8 und Bumperunterstruktur 9 ist durch einen entsprechend vergrößerten Spacer 13 auszugleichen, damit auch hier der Barriereneindringweg 16 bei niedrigen Kollisionsgeschwindigkeiten eingehalten werden kann, ohne dass der Heckbereich 28 des Fahrzeugmodells 15 beschädigt wird. Somit ist es möglich, für unterschiedliche Modellreihen identische Bummerunterstrukturen 9 vorzusehen und dennoch die Beschädigungsfreiheit, beispielsweise des Heckbereichs 28 für alle Modelle einzuhalten, indem lediglich das Stoßkraftübertragungselement 12 als Spacer 13 an die unterschiedlichen Stylings bzw. Designs von Modellreihen oder auch plattformübergreifend angepasst wird.

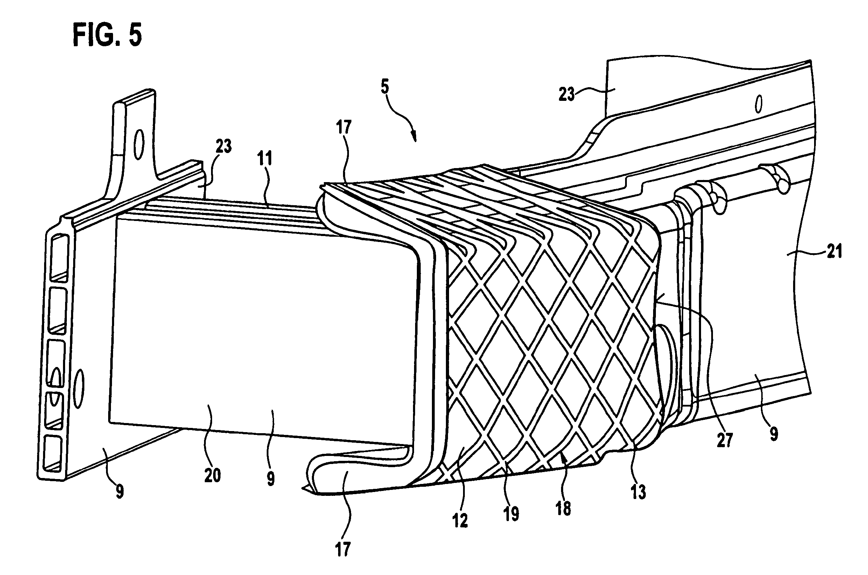

Figur 5 zeigt eine schematische, perspektivische Teilansicht eines Aufprallbegrenzungssystems 5, einer fünften Ausführungsform der Erfindung. In dieser Darstellung ist das Verblendelement weggelassen, um die Kontur 27 zum Verblendelement hin und die Wabenstruktur 18 des Stoßkraftübertragungselements 12 zu zeigen. In dieser Ausführungsform der Erfindung umhüllt das Stoßkraftübertragungselement 12 weitestgehend einen Querträger 21, der sich auf stoßaufnehmenden Elementen 11 in Form von Deformationselementen 20 abstützt, welche wiederum an einem Metallteil 23 fixiert sind, das als Querbalken die Verbindung zur Karosserie herstellt.

Dieser Querbalken bzw. dieses Metallteil 23 weist in dieser Ausführungsform der Erfindung eine stranggepresste Aluminiumlegierung auf. Der Querträger 21 kann ein Stahlblechteil oder auch ein Aluminiumspritzgussteil darstellen, während die Deformationselemente 20 so ausgelegt sind, dass sie eine entsprechend hohe Stoßenergie durch Deformation bei niedrigen Kollisionsgeschwindigkeiten abfangen können. Wenn auch in dieser Ausführungsform der Erfindung das Stoßkraftübertragungselement 12 teilweise den Querträger 21 der Bumperunterstruktur 9 umhüllt, so sind dennoch auch Ausführungen möglich, bei denen das Stoßkraftübertragungselement 12 vom Querträger 21 teilweise umhüllt wird.

Die Stege 19 der Wabenstruktur 18 sind derart dimensioniert, dass sie eine entsprechend hohe Stoßkraft übertragen können. Außerdem sind sie in Stoßrichtung ausgerichtet. Wie dieses Stoßkraftübertragungselement 12 zeigt, sind die Wabenstrukturen 18 karoförmig angeordnet, jedoch sind auch polygonale, insbesondere sechseckige Strukturen möglich.

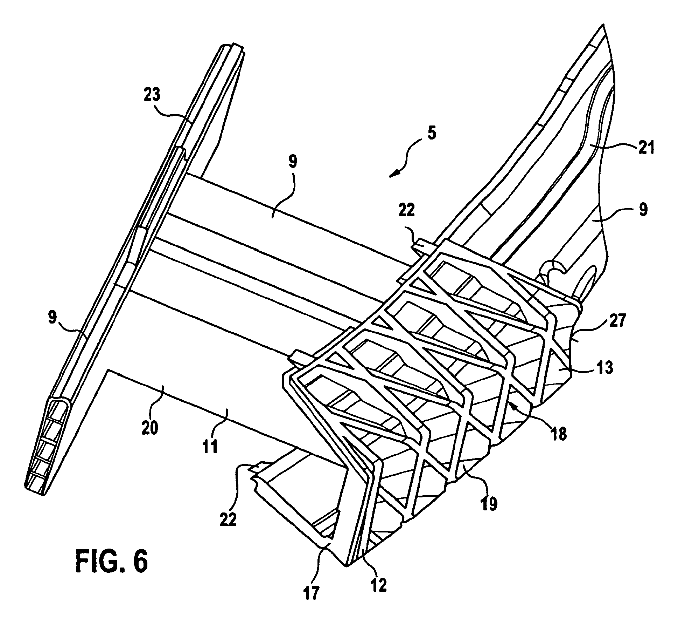

Figur 6 zeigt eine schematische, perspektivische Teilansicht des Aufprallbegrenzungssystems 5 gemäß Figur 5 aus einem anderen Blickwinkel, so dass nun die Fixierung des Stoßkraftübertragungselements 12 an dem Querträger 21 mit Hilfe von Schnapphaken 22 sichtbar wird. Diese Schnapphaken 22 klipsen beim Anbringen des Stoßkraftübertragungselements 12 formschlüssig über den Rand des Querträgers 21, so dass das Stoßkraftübertragungselement 12 im Gegensatz zur Ausführungsform der Figur 1 auf dem Querträger 21 fixiert ist.

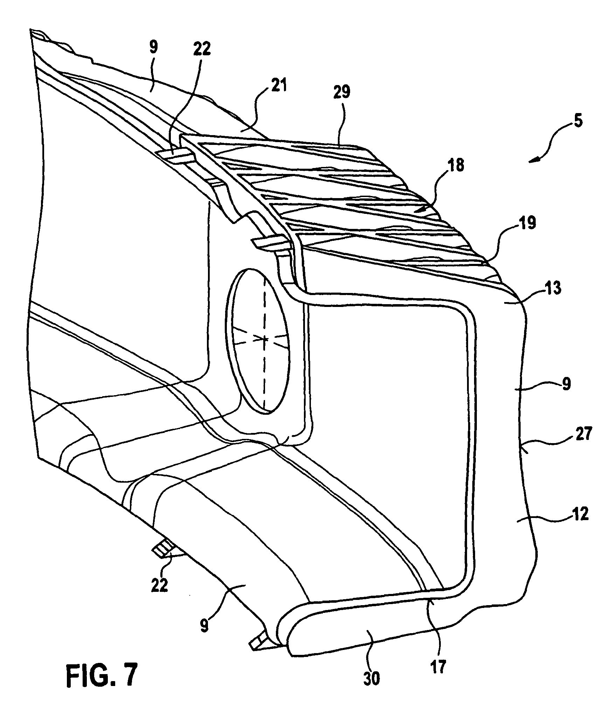

Figur 7 zeigt eine schematische, perspektivische Teilansicht des Aufprallbegrenzungssystems 5 gemäß Figur 5 aus einem weiteren geänderten Blickwinkel. Hier wird deutlich, dass die Kontur 17 des Stoßkraftübertragungselements 12 exakt an die Kontur des Querträgers 21 angepasst ist, und dass die Schnapphaken 22 das Stoßkraftübertragungselements 12 auf dem Querträger 21 formschlüssig fixieren. Die Form des Stoßkraftübertragungselements 12 entspricht einem großen "C", wobei die Schenkel 29 und 30 der C-Form nicht zur Stoßkraftübertragung beitragen, sondern vielmehr die Fixierungsfunktion der Schnapphaken 22 ermöglichen und unterstützen.

### Bezugszeichenliste

- 1: Aufprallbegrenzungssystem (1. Ausführungsform)
- 2: Aufprallbegrenzungssystem (2. Ausführungsform)
- 3: Aufprallbegrenzungssystem (3. Ausführungsform)
- 4: Aufprallbegrenzungssystem (4. Ausführungsform)
- 5: Aufprallbegrenzungssystem (5. Ausführungsform)
- 7: Fahrzeug
- 8: Verblendelement
- 9: Bumperunterstruktur
- 10: Fahrzeugkarosserie
- 11: stoßaufnehmendes Element
- 12: Stoßkraftübertragungselement
- 13: Spacer
- 14: Fahrzeugmodell
- 15: Fahrzeugmodell
- 16: Barriereeindringweg
- 17: Kontur des Stoßkraftübertragungselements
- 18: Wabenstruktur
- 19: Stege der Wabenstruktur
- 20: Deformationselement
- 21: Querträger
- 22: Schnapphaken
- 23: Metallteil
- 24: Überhang
- 25: Heckseite des Querträgers
- 26: Innenseite
- 27: Kontur des Stoßkraftübertragungselements
- 28: Heckbereich
- 29: Schenkel
- 30: Schenkel
- a: Abstand
- c: konstante Tiefe

## Patentansprüche

1. Aufprallbegrenzungssystem eines Fahrzeugs (7) mit einem Verblendelement (8) und einer Bumperunterstruktur (9), wobei die Bumperunterstruktur (9) beabstandet vom Verblendelement (8) und verdeckt durch das Verblendelement (8) an der Fahrzeugkarosserie angeordnet ist, und wobei die Bumperunterstruktur (9) Stoßenergie aufnehmende Elemente (11) aufweist,
**dadurch gekennzeichnet, dass**
das Aufprallbegrenzungssystem (1) ein Stoßkraftübertragungselement aufweist, das zwischen dem Verblendelement (8) und der Bumperunterstruktur (9) angeordnet ist, wobei das Stoßkraftübertragungselement (12) formstabil und unnachgiebig ist und eine Stoßkrafteinwirkung auf das Verblendelement (8) auf die Bumperunterstruktur (9) überträgt.

2. Aufprallbegrenzungssystem nach Anspruch 1,
**dadurch gekennzeichnet, dass**
das Stoßkraftübertragungselement (12) einen Spacer (13) bildet und Stylingunterschiede von Fahrzeugmodellen (14, 15) in Bezug auf einen Barriereeindringweg (16) ausgleicht.

3. Aufprallbegrenzungssystem nach Anspruch 1 oder Anspruch 2,
**dadurch gekennzeichnet, dass**
das Stoßkraftübertragungselement (12) eine formstabile, strukturierte Kunststoffmasse aufweist, deren Konturen (17) an das Verblendelement (8) und die Bumperunterstruktur (9) angepasst ist.

4. Aufprallbegrenzungssystem nach Anspruch 3,
**dadurch gekennzeichnet, dass**
die Kunststoffmasse eine partikelgefüllte Kunststoffmasse mit einem Füllgrad von 40 Vol.% bis 80 Vol.% Hartstoffpartikel aufweist, wobei die Hartstoffpartikel insbesondere Keramikpartikel, Kurzfasern oder Whisker aufweisen.

5. Aufprallbegrenzungssystem nach einem der vorhergehenden Ansprüche,
**dadurch gekennzeichnet, dass**
das Stoßkraftübertragungselement (12) eine formstabile, strukturierte Metallkonstruktion aufweist, deren Konturen (17) an das Verblendelement (8) und die Bumperunterstruktur (9) angepasst ist.

6. Aufprallbegrenzungssystem nach einem der vorhergehenden Ansprüche,
**dadurch gekennzeichnet, dass**
das Stoßkraftübertragungselement (12) eine Wabenstruktur (18) mit insbesondere karoförmiger, viereckiger, sechseckiger oder polygonaler Wabenformen aufweist.

7. Aufprallbegrenzungssystem nach Anspruch 6,
**dadurch gekennzeichnet, dass**
Stege (19) der Wabenstruktur (18) in Stoßkraftrichtung ausgerichtet sind.

8. Aufprallbegrenzungssystem nach einem der vorhergehenden Ansprüche,
**dadurch gekennzeichnet, dass**
die Bumperunterstruktur (9) Deformationselemente (20) aufweist.

9. Aufprallbegrenzungssystem nach einem der vorhergehenden Ansprüche,
**dadurch gekennzeichnet, dass**
die Bumperunterstruktur (9) einen formstabilen elastisch nachgiebigen Querträger (21) aufweist, der sich auf Deformationselemente (20) abstützt.

10. Aufprallbegrenzungssystem nach Anspruch 9,
**dadurch gekennzeichnet, dass**
das Stoßkraftübertragungselement (12) den Querträger (21) mindestens teilweise umhüllt oder vom Querträger teilweise umhüllt wird oder am Querträger (21) formschlüssig fixiert ist.

11. Aufprallbegrenzungssystem nach einem der vorhergehenden Ansprüche,
**dadurch gekennzeichnet, dass**
das Stoßkraftübertragungselement (12) Schnapphaken (22) aufweist, mit denen es an der Bumperunterstruktur (9) oder an das Verblendelement (8) geklipst ist.

12. Aufprallbegrenzungssystem nach einem der vorhergehenden Ansprüche,
**dadurch gekennzeichnet, dass**
das Verblendelement (8) oder die Bumperunterstruktur (9) Befestigungselemente aufweisen, an denen das Stoßkraftübertragungselement (12) montiert ist.

13. Aufprallbegrenzungssystem nach einem der vorhergehenden Ansprüche,
**dadurch gekennzeichnet, dass**
das Stoßkraftübertragungselement (12) einstückig oder mehrstückig auf der Breite der Bumperunterstruktur (9) angeordnet ist.

14. Aufprallbegrenzungssystem nach einem der vorhergehenden Ansprüche,
**dadurch gekennzeichnet, dass**
die Bumperunterstruktur (9) ein Metallteil (23), insbesondere ein Aluminiumstrangpressteil oder ein Stahlblechteil, aufweist.

## Claims

1. An impact limiting system of a vehicle (7), comprising a facing element (8) and a bumper substructure (9), with the bumper substructure (9) being arranged on the vehicle body at a distance from the facing element (8) and covered by the facing element (8), and with the bumper substructure (9) comprising elements (11) absorbing impact energy, **characterized in that** the impact limiting system (1) comprises an impact transfer element which is arranged between the facing element (8) and the bumper substructure (9), with the impact transfer element (12) being dimensionally stable and non-yielding, and transferring an impact force action on the facing element (8) onto the bumper substructure (9).

2. An impact limiting system according to claim 1, **characterized in that** the impact transfer element (12) forms a spacer (13) and compensates differences in styling of vehicle models (14, 15) with respect to a barrier penetration path (16).

3. An impact limiting system according to claim 1 or claim 2, **characterized in that** the impact transfer element (12) comprises a dimensionally stable structured plastic compound, the contours (17) of which are adjusted to the facing element (8) and the bumper substructure (9).

4. An impact limiting system according to claim 3, **characterized in that** the plastic compound comprises a particle-filled plastic compound with a filling degree of 40% by volume to 80% by volume of solid particles, with the solid particles especially comprising ceramic particles, short fibers or whiskers.

5. An impact limiting system according to one of the preceding claims, **characterized in that** the impact force transfer element (12) comprises a dimensionally stable structured metal construction, the contours (17) of which are adjusted to the facing element (8) and the bumper substructure (9).

6. An impact limiting system according to one of the preceding claims, **characterized in that** the impact force transfer element (12) has a honeycomb structure (18) with especially diamond-shaped, quadrangular, hexagonal or polygonal honeycomb shapes.

7. An impact limiting system according to claim 6, **characterized in that** the webs (19) of the honeycomb structure (18) are aligned in the direction of the impact force.

8. An impact limiting system according to one of the preceding claims, **characterized in that** the bumper substructure (9) comprises deformation elements (20).

9. An impact limiting system according to one of the preceding claims, **characterized in that** the bumper substructure (9) comprises a dimensionally stable, elastically resilient crossmember (21) which rests on the deformation elements (20).

10. An impact limiting system according to claim 9, **characterized in that** the impact transfer element (12) encloses the crossmember (21) at least partly or is enclosed at least partly by the crossmember or is fixed to the crossmember (21) in an interlocking fashion.

11. An impact limiting system according to one of the preceding claims, **characterized in that** the impact transfer element (12) comprises snap-in hooks (22) with which it is clipped onto the bumper substructure (9) or the facing element (8).

12. An impact limiting system according to one of the preceding claims, **characterized in that** the facing element (8) or the bumper substructure (9) comprises fastening elements on which the impact transfer element (12) is mounted.

13. An impact limiting system according to one of the preceding claims, **characterized in that** the impact transfer element (12) is arranged integrally or in several parts over the width of the bumper substructure (9).

14. An impact limiting system according to one of the preceding claims, **characterized in that** the bumper substructure (9) comprises a metal part (23), especially an aluminium extrudate or a sheet-metal part.

## Revendications

1. Système limiteur d'impact d'un véhicule (7) avec un élément d'habillage (8) et une infrastructure de pare-chocs (9), dans lequel l'infrastructure de pare-chocs (9) est disposée sur la carrosserie du véhicule à distance de l'élément d'habillage (8) et couverte par l'élément d'habillage (8), et dans lequel l'infrastructure de pare-chocs (9) comporte des éléments absorbant l'énergie de l'impact (11),
**caractérisé en ce que** le système limiteur d'impact (1) comporte un élément transmettant la force de l'impact, qui est disposé entre l'élément d'habillage (8) et l'infrastructure de pare-chocs (9), l'élément transmettant la force de l'impact (12) étant de forme stable et non flexible et transmettant une force d'impact agissant sur l'élément d'habillage (8) à l'infrastructure de pare-chocs (9).

2. Système limiteur d'impact selon la revendication 1, **caractérisé en ce que** l'élément transmettant la force de l'impact (12) forme un élément d'écartement (13) et compense les différences de style de modèles de véhicule (14, 15) en ce qui concerne le trajet de pénétration des barrières (16).

3. Système limiteur d'impact selon la revendication 1 ou 2, **caractérisé en ce que** l'élément transmettant la force de l'impact (12) présente une masse en plastique structurée de forme stable, dont les contours (17) sont adaptés à l'élément d'habillage (8) et à l'infrastructure de pare-chocs (9).

4. Système limiteur d'impact selon la revendication 3, **caractérisé en ce que** la masse en plastique est une masse en plastique remplie de particules avec un taux de remplissage de 40 % en volume à 80 % en volume de particules dures, lesquelles particules dures comportent en particulier des particules de céramique, des fibres courtes ou des trichites.

5. Système limiteur d'impact selon l'une des revendications précédentes, **caractérisé en ce que** l'élément transmettant la force de l'impact (12) présente une construction métallique structurée de forme stable, dont les contours (17) sont adaptés à l'élément d'habillage (8) et à l'infrastructure de pare-chocs (9).

6. Système limiteur d'impact selon l'une des revendications précédentes, **caractérisé en ce que** l'élément transmettant la force de l'impact (12) présente une structure alvéolée (18) avec en particulier des alvéoles en forme de losange, de carré, d'hexagone ou de polygone.

7. Système limiteur d'impact selon la revendication 6, **caractérisé en ce que** des barrettes (19) de la structure alvéolée (18) sont orientées dans le sens de la force d'impact.

8. Système limiteur d'impact selon l'une des revendications précédentes, **caractérisé en ce que** l'infrastructure de pare-chocs (9) présente des éléments déformables (20).

9. Système limiteur d'impact selon l'une des revendications précédentes, **caractérisé en ce que** infrastructure de pare-chocs (9) présente une traverse (21) flexible de façon élastique et de forme stable qui s'appuie sur des éléments déformables (20).

10. Système limiteur d'impact selon la revendication 9, **caractérisé en ce que** l'élément transmettant la force de l'impact (12) enveloppe au moins partiellement la traverse (21) ou est partiellement enveloppé par la traverse ou est fixé par engagement positif sur la traverse (21).

11. Système limiteur d'impact selon l'une des revendications précédentes, **caractérisé en ce que** l'élément transmettant la force de l'impact (12) présente des crochets d'engagement (22) avec lesquels il est clipsé sur l'infrastructure de pare-chocs (9) ou sur l'élément d'habillage (8).

12. Système limiteur d'impact selon l'une des revendications précédentes, **caractérisé en ce que** l'élément d'habillage (8) ou l'infrastructure de pare-chocs (9) présente des éléments de fixation sur lesquels l'élément transmettant la force de l'impact (12) est monté.

13. Système limiteur d'impact selon l'une des revendications précédentes, **caractérisé en ce que** l'élément transmettant la force de l'impact (12) est disposé d'une pièce ou en plusieurs pièces sur la largeur de l'infrastructure de pare-chocs (9).

14. Système limiteur d'impact selon l'une des revendications précédentes, **caractérisé en ce que** l'infrastructure de pare-chocs (9) présente une pièce métallique (23), en particulier une pièce extrudée en aluminium ou une pièce de tôle d'acier.
